# EUROPEAN PATENT APPLICATION

(11) **EP 4 701 250 A1**
(43) Date of publication of application: **25.02.2026**
(21) Application number: 24814269.7
(22) Date of filing: 22.05.2024
(51) Int. Cl.: H04W 12/03

(54) **RANGING METHOD AND COMMUNICATION APPARATUS**

(30) Priority: 01.06.2023 CN 202310644978
(71) Applicant: Huawei Technologies Co., Ltd., Shenzhen, Guangdong 518129 (CN)
(72) Inventor: ZHANG, Huisha, Shenzhen, Guangdong 518129 (CN); WANG, Kang, Shenzhen, Guangdong 518129 (CN)
(74) Representative: Goddar, Heinz J.
(86) International application number: PCT/CN2024/094690
(87) International publication number: WO 2024/245070

(57) **Abstract**

This application provides a ranging method and apparatus. In the method, when ranging is performed between a first device and a second device, each ranging frame in one ranging round is determined based on different ranging encryption parameters, so that ranging frames generated in the ranging round are different from each other. In other words, the first device and the second device use different encryption parameters to encrypt and decrypt different ranging frames. This ensures that each ranging frame has a unique encryption parameter in a ranging process, so that secure ranging performance can be effectively improved.

## Description

This application claims priority to Chinese Patent Application No. 202310644978.0, filed with the China National Intellectual Property Administration on June 1, 2023 and entitled "RANGING METHOD AND COMMUNICATION APPARATUS", which is incorporated herein by reference in its entirety.

### TECHNICAL FIELD

This application relates to the communication field, and more specifically, to a ranging method and a communication apparatus.

### BACKGROUND

An ultra-wideband (ultra-wideband, UWB) technology is a wireless carrier communication technology that uses nanosecond-level non-sinusoidal narrow pulses for data transmission. The ultra-wideband technology occupies an extremely large bandwidth, has features such as a high transmission rate and a large system capacity, and can coexist with existing communication systems. Based on these features, the UWB may achieve higher ranging and positioning accuracy than an existing wireless positioning technology, with the positioning accuracy reaching a centimeter level. In addition, high temporal resolution of the UWB enables the UWB to exhibit an excellent anti-multipath capability, allowing for ranging and positioning even in complex multipath environments. Therefore, the UWB has become a research hotspot currently.

With the continuous updates of UWB standards, a new standard introduces a scrambled timestamp sequence (scrambled timestamp sequence, STS) to a ranging process, to enhance ranging security. However, in one UWB ranging round of ranging between two devices, each sent STS ranging frame is the same, which poses a security risk.

### SUMMARY

This application provides a ranging method, to implement ranging between a first device and a second device in a more secure manner.

According to a first aspect, a ranging method is provided, where the method is applied to a first device, the first device includes a first broadband system and a first narrowband system, a channel bandwidth corresponding to the first broadband system is greater than a channel bandwidth corresponding to the first narrowband system, and the method includes: The first broadband system generates a first ranging encryption parameter, where the first ranging encryption parameter includes a first ranging sequence value, the first ranging encryption parameter is the same as a second ranging encryption parameter, and the first ranging encryption parameter and the second ranging encryption parameter are respectively encryption parameters that need to be used for the first device and a second device to perform ranging; the first broadband system sends a first ranging frame to a second broadband system of the second device, where the first ranging frame is generated based on the first ranging encryption parameter; and the first broadband system receives a second ranging frame from the second broadband system based on a third ranging encryption parameter, where the third ranging encryption parameter is a corresponding parameter obtained by updating the first ranging sequence value in the first ranging encryption parameter to a second ranging sequence value, and the second ranging frame is generated based on the third ranging encryption parameter.

For example, the broadband system is a UWB communication system, and the narrowband system is a communication system such as Wi-Fi, Bluetooth, or Zigbee (Zigbee protocol).

In the foregoing technical solution, each ranging frame in the ranging round is determined based on different ranging encryption parameters. Therefore, the generated ranging frames are different from each other. To be specific, the first device and the second device encrypt and decrypt different ranging frames by using different encryption parameters. This ensures that each ranging frame has a unique encryption parameter in a ranging process, so that secure ranging performance can be effectively improved.

In some implementations of the first aspect, the first ranging encryption parameter further includes a first ranging sequence key.

In some implementations of the first aspect, the method further includes: The first broadband system generates a first ranging sequence based on the first ranging encryption parameter; and the first broadband system generates the first ranging frame based on the first ranging sequence.

In some implementations of the first aspect, that the first broadband system receives the second ranging frame from the second broadband system based on the third ranging encryption parameter includes: The first broadband system generates a second ranging sequence based on the third ranging encryption parameter; and the first broadband system receives the second ranging frame from the second broadband system based on the second ranging sequence.

In some implementations of the first aspect, the first ranging sequence is a channel impulse response training sequence.

In some implementations of the first aspect, the second ranging sequence value is obtained by adding a first value and a value at a corresponding first position of the first ranging sequence value.

Alternatively, the first ranging sequence value may be continuously updated in another method, provided that an update method used by the first broadband system is consistent with an update method used by the second broadband system, that is, it is ensured that an updated ranging sequence value of the first broadband system is the same as an updated ranging sequence value of the second broadband system. A ranging sequence value update method is not specifically limited in this application.

In some implementations of the first aspect, the first ranging encryption parameter is generated by the first broadband system based on ranging configuration information and a first key derivation algorithm, and the second ranging encryption parameter is generated by the second broadband system based on the ranging configuration information and the first key derivation algorithm.

In the foregoing technical solution, the first device and the second device separately derive a same ranging encryption parameter based on same ranging configuration information and a same key derivation algorithm without establishing a communication link between broadband systems to perform communication negotiation on a related parameter. This can effectively reduce an operating time of the broadband systems and reduce system power consumption.

In some implementations of the first aspect, the method further includes: The first narrowband system sends ranging configuration information to a second narrowband system of the second device.

In the foregoing technical solution, the first device and the second device negotiate the ranging configuration information in the narrowband systems, so that an operating time of the broadband systems can be effectively reduced, and system power consumption can be reduced.

In some implementations of the first aspect, the ranging configuration information includes a session key and a ranging parameter that are of the first device and the second device.

In some implementations of the first aspect, the method further includes: The first broadband system sends a third ranging frame to the second broadband system, where the third ranging frame is generated based on a fourth ranging encryption parameter, and the fourth ranging encryption parameter is a corresponding parameter obtained by updating the second ranging sequence value in the third ranging encryption parameter to a third ranging sequence value.

In some implementations of the first aspect, the method further includes: The first broadband system sends the first ranging frame to a third broadband system of a third device; and the first broadband system receives a fourth ranging frame from the third broadband system based on the third ranging encryption parameter, where the fourth ranging frame is generated based on the third ranging encryption parameter.

For example, when the ranging method is for double-sided two-way ranging, the first ranging frame is a ranging initiation frame, the second ranging frame is a ranging response frame, the third ranging frame is a ranging final frame, and the first ranging frame, the second ranging frame, and the third ranging frame are ranging frames that need to be sent in one ranging round.

For example, when the ranging method is for single-sided two-way ranging, the method does not include the third ranging frame. The first ranging frame is the ranging initiation frame, the second ranging frame is the ranging response frame, and the first ranging frame and the second ranging frame are ranging frames that need to be sent in one ranging round.

In some implementations of the first aspect, the method further includes: When a quantity of ranging rounds between the first device and the second device is equal to a first threshold, the first broadband system generates a fifth ranging encryption parameter, where the fifth ranging encryption parameter is the same as a sixth ranging encryption parameter, the fifth ranging encryption parameter is different from the first ranging encryption parameter, the sixth ranging encryption parameter is a ranging encryption parameter generated by the second broadband system when the quantity of ranging rounds is equal to the first threshold, and the fifth ranging encryption parameter and the sixth ranging encryption parameter are respectively encryption parameters that need to be used for the first device and the second device to perform ranging after a quantity of ranging rounds corresponding to the first threshold.

It may be understood that, after a plurality of ranging rounds, as the first ranging sequence value is continuously updated, updated ranging sequence values may be repeated. Therefore, in this method, when the quantity of ranging rounds between the first device and the second device is equal to the first threshold, the first broadband system and the second broadband system may continue to perform ranging based on a re-obtained new ranging encryption parameter, to further ensure that each ranging frame has a unique encryption parameter in a ranging process corresponding to the plurality of ranging rounds is measured once.

According to a second aspect, a ranging method is provided, where the method is applied to a second device, the second device includes a second broadband system and a second narrowband system, a channel bandwidth corresponding to the second broadband system is greater than a channel bandwidth corresponding to the second narrowband system, and the method includes: The second broadband system obtains a second ranging encryption parameter, where the second ranging encryption parameter includes a first ranging sequence value, the second ranging encryption parameter is the same as a first ranging encryption parameter, and the first ranging encryption parameter and the second ranging encryption parameter are respectively encryption parameters that need to be used for a first device and the second device to perform ranging; the second broadband system receives a first ranging frame from a first broadband system of the first device based on the second ranging encryption parameter, where the first ranging frame is generated based on the first ranging encryption parameter; and the second broadband system sends a second ranging frame to the first broadband system, where the second ranging frame is generated based on a third ranging encryption parameter, and the third ranging encryption parameter is a corresponding parameter obtained by updating the first ranging sequence value in the first ranging encryption parameter to a second ranging sequence value.

For beneficial effect of the second aspect, refer to the descriptions in the first aspect. Details are not described herein again.

In some implementations of the second aspect, the first ranging encryption parameter further includes a first ranging sequence key.

In some implementations of the second aspect, that the second broadband system receives the first ranging frame from the first broadband system of the first device based on the first ranging encryption parameter includes: The second broadband system generates a first ranging sequence based on the first ranging encryption parameter; and the second broadband system receives the first ranging frame from the first broadband system based on the first ranging sequence.

In some implementations of the second aspect, the method further includes: The second broadband system generates a second ranging sequence based on the third ranging encryption parameter; and the second broadband system generates the second ranging frame based on the second ranging sequence.

In some implementations of the second aspect, the second ranging sequence is a channel impulse response training sequence.

In some implementations of the second aspect, the second ranging sequence value is obtained by adding a first value and a value at a corresponding first position of the first ranging sequence value.

In some implementations of the second aspect, the first ranging encryption parameter is generated by the first broadband system based on ranging configuration information and a first key derivation algorithm, and the second ranging encryption parameter is generated by the second broadband system based on the ranging configuration information and the first key derivation algorithm.

In some implementations of the second aspect, the method further includes: The second narrowband system receives the ranging configuration information from a first narrowband system of the first device.

In some implementations of the second aspect, the ranging configuration information includes a session key and a ranging parameter that are of the first device and the second device.

In some implementations of the second aspect, the method further includes: The second broadband system receives a third ranging frame from the first broadband system based on a fourth ranging encryption parameter, where the fourth ranging encryption parameter is a corresponding parameter obtained by updating the second ranging sequence value in the third ranging encryption parameter to a third ranging sequence value, and the third ranging frame is generated based on the fourth ranging encryption parameter.

In some implementations of the second aspect, the method further includes: When a quantity of ranging rounds between the first device and the second device is equal to a first threshold, the second broadband system generates a sixth ranging encryption parameter, where the sixth ranging encryption parameter is the same as a fifth ranging encryption parameter, the sixth ranging encryption parameter is different from the second ranging encryption parameter, the fifth ranging encryption parameter is a ranging encryption parameter generated by the first broadband system when the quantity of ranging rounds is equal to the first threshold, and the fifth ranging encryption parameter and the sixth ranging encryption parameter are respectively encryption parameters that need to be used for the first device and the second device to perform ranging after a quantity of ranging rounds corresponding to the first threshold.

According to a third aspect, this application provides a communication apparatus. The communication apparatus has a function of implementing the method according to the first aspect or any one of the possible implementations of the first aspect. The function may be implemented by hardware, or may be implemented by executing corresponding software by hardware. The hardware or the software includes one or more units that correspond to the foregoing function, for example, a processing unit and/or a communication unit.

In an implementation, the apparatus is a first device. When the apparatus is the first device, the communication unit may be a transceiver or an input/output interface, and the processing unit may be at least one processor. For example, the transceiver may be a transceiver circuit. For example, the input/output interface may be an input/output circuit.

In another implementation, the apparatus is a chip, a chip system, or a circuit used in the first device. When the apparatus is the chip, the chip system, or the circuit used in the first device, the communication unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

According to a fourth aspect, this application provides a communication apparatus. The communication apparatus has a function of implementing the method according to the second aspect or any one of the possible implementations of the second aspect. The function may be implemented by hardware, or may be implemented by executing corresponding software by hardware. The hardware or the software includes one or more units that correspond to the foregoing function, for example, a processing unit, a receiving unit, or a sending unit.

In an implementation, the apparatus is a second device. When the apparatus is the second device, the communication unit may be a transceiver or an input/output interface, and the processing unit may be at least one processor. For example, the transceiver may be a transceiver circuit. For example, the input/output interface may be an input/output circuit.

In another implementation, the apparatus is a chip, a chip system, or a circuit used in the second device. When the apparatus is the chip, the chip system, or the circuit used in the second device, the communication unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

According to a fifth aspect, this application provides a communication device that includes at least one processor. The at least one processor is coupled to at least one memory, the at least one memory is configured to store a computer program or instructions, and the at least one processor is configured to invoke the computer program or the instructions from the at least one memory and run the computer program or the instructions, to enable the communication device to perform the method according to the first aspect or any one of the possible implementations of the first aspect.

In an implementation, the apparatus is a first device.

In another implementation, the apparatus is a chip, a chip system, or a circuit used in the first device.

According to a sixth aspect, this application provides a communication device that includes at least one processor. The at least one processor is coupled to at least one memory, the at least one memory is configured to store a computer program or instructions, and the at least one processor is configured to invoke the computer program or the instructions from the at least one memory and run the computer program or the instructions, to enable the communication device to perform the method according to the second aspect or any one of the possible implementations of the second aspect.

In an implementation, the apparatus is a second device.

In another implementation, the apparatus is a chip, a chip system, or a circuit used in the second device.

According to a seventh aspect, this application provides a processor. The processor is configured to perform the methods provided in the foregoing aspects.

Operations such as sending and obtaining/receiving related to the processor may be understood as operations such as output and receiving or input of the processor, or operations such as output and receiving or input performed by a radio frequency circuit and an antenna, unless otherwise specified, or provided that the operations do not contradict actual functions or internal logic of the operations in related descriptions. This is not limited in this application.

According to an eighth aspect, this application provides a computer-readable storage medium. The computer-readable storage medium stores computer instructions. When the computer instructions are run on a computer, the method according to the first aspect or any one of the possible implementations of the first aspect is performed.

According to a ninth aspect, this application provides a computer-readable storage medium. The computer-readable storage medium stores computer instructions. When the computer instructions are run on a computer, the method according to the second aspect or any one of the possible implementations of the second aspect is performed.

According to a tenth aspect, this application provides a computer program product. The computer program product includes computer program code. When the computer program code is run on a computer, the method according to the first aspect or any one of the possible implementations of the first aspect is performed.

According to an eleventh aspect, this application provides a computer program product. The computer program product includes computer program code. When the computer program code is run on a computer, the method according to the second aspect or any one of the possible implementations of the second aspect is performed.

According to a twelfth aspect, a communication system is provided. The communication system includes the communication devices shown in the fifth aspect and the sixth aspect.

### BRIEF DESCRIPTION OF DRAWINGS

FIG. 1 is a diagram of two application scenarios according to this application;
FIG. 2 is a diagram of a ranging and positioning system to which a UWB ranging technology is applied applicable to an embodiment of this application;
FIG. 3 is a diagram of a UWB ranging method according to this application;
FIG. 4 is a schematic flowchart of a ranging method according to an embodiment of this application;
FIG. 5 is a diagram in which each ranging frame has a unique encryption parameter when one device performs ranging on another device according to this application;
FIG. 6 is a diagram in which each ranging frame has a unique encryption parameter when one device performs ranging on multiple devices according to this application;
FIG. 7 is a diagram in which each ranging frame has a unique encryption parameter when multiple devices perform ranging on multiple devices according to this application;
FIG. 8 is a block diagram of a communication apparatus 200 according to an embodiment of this application; and
FIG. 9 is a block diagram of a communication apparatus 300 according to an embodiment of this application.

### DESCRIPTION OF EMBODIMENTS

The following describes technical solutions of embodiments in this application with reference to accompanying drawings.

Embodiments of this application may be applied to a wireless personal area network (wireless personal area network, WPAN) based on a UWB technology. Currently, a standard used by the WPAN is an institute of electrical and electronics engineer (institute of electrical and electronics engineer, IEEE) 802.15 series. The WPAN may be used for communication between digital auxiliary devices in a small range, for example, a telephone, a computer, and an auxiliary device, and an operating range of the WPAN is usually within 10 m. Technologies supporting the wireless personal area network include Bluetooth (Bluetooth), ZigBee (ZigBee), ultra-wideband, an IrDA infrared (infrared) connection technology, HomeRF, and the like. A person skilled in the art easily understands that, various aspects in this application may be extended to another network using various standards or protocols, for example, a wireless local area network (Wireless Local Area Network, WLAN), a high performance radio LAN (High Performance Radio LAN, HIPERLAN) (a wireless standard similar to the IEEE 802.11 standard, mainly used in Europe), a wide area network (WAN), or another network that is currently known or developed in the future. From a perspective of network composition, the WPAN is located at a bottom layer of an entire network architecture and is for a wireless connection between devices in a small range, namely, a point-to-point short-range connection, and may be considered as a short-range wireless communication network. Based on different application scenarios, WPANs are further classified into a high rate (high rate, HR)-WPAN and a low rate (low rate)-WPAN. The HR-WPAN may be used to support various high-rate multimedia applications, including high-quality sound image delivery, multi-megabyte music and image document transmission, and the like. The LR-WPAN may be used for common services in daily life.

In the WPAN, devices may be classified into a full-function device (full-function device, FFD) and a reduced-function device (reduced-function device, RFD) based on communication capabilities of the devices. FFD devices can communicate with each other, and the FFD device and the RFD device can communicate with each other. RFD devices cannot directly communicate with each other, and can only communicate with the FFD device, or forward data externally via one FFD device. An FFD device associated with the RFD is referred to as a coordinator (coordinator) of the RFD. The RFD device is mainly for a simple control application, like a light switch and a passive infrared sensor, transmits a small amount of data, and occupies a small quantity of transmission resources and communication resources. Therefore, costs of the RFD device are low. The coordinator may also be referred to as a personal area network (personal area network, PAN) coordinator, a central control node, or the like. The PAN coordinator is a main control node of an entire network, and each ad hoc network can have only one PAN coordinator having functions of member identity management, link information management, and packet forwarding. Optionally, the device in embodiments of this application may be a device that supports a plurality of WPAN standards, such as 802.15.4a, 802.15.4z, and a currently discussed version or a later version.

In embodiments of this application, the device may be a communication server, a router, a switch, a bridge, a computer, a mobile phone, a home smart device, a vehicle-mounted communication device, or the like.

In embodiments of this application, the device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not specially limited in embodiments of this application, provided that a program that records code of the method provided in embodiments of this application can be run to perform communication according to the method provided in embodiments of this application. For example, the execution body of the method provided in embodiments of this application may be the FFD or the RFD, or a functional module that is in the FFD or the RFD and that can invoke and execute a program.

Alternatively, embodiments of this application are further applicable to a wireless local area network system, like an internet of things (internet of things, IoT) network or vehicle-to-everything (Vehicle to X, V2X). Certainly, embodiments of this application are applicable to other possible communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) communication system, and a future sixth generation (6th generation, 6G) communication system.

The foregoing communication systems applicable to this application are merely examples for description, and are not limited thereto. This is uniformly described herein, and details are not described below again.

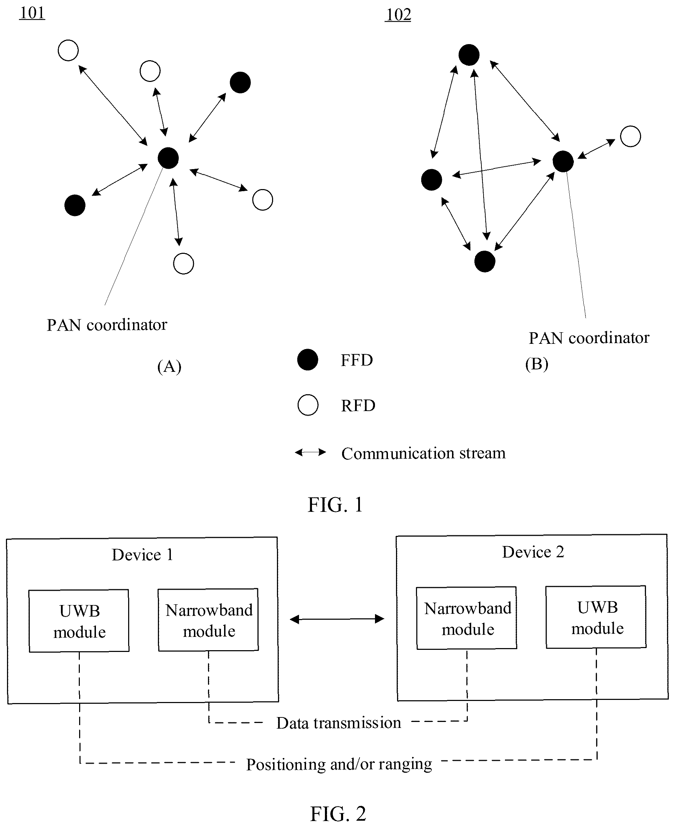

FIG. 1 is a diagram of two application scenarios according to this application. In a system 101 shown in (A) in FIG. 1, a plurality of FFD devices and a plurality of RFD devices form a communication system with a star topology (star topology), where one FFD is a PAN controller. In the communication system with the star topology, the PAN controller performs data transmission with one or more other devices. In other words, a one-to-multiple or multiple-to-one data transmission architecture may be established between a plurality of devices. In a system 102 shown in (B) in FIG. 1, a plurality of FFD devices and one RFD device form a communication system with a peer-to-peer topology (peer-to-peer topology), where one FFD is a PAN controller. In the communication system with the peer-to-peer topology, a multiple-to-multiple data transmission architecture may be established between a plurality of different devices.

It should be understood that (A) in FIG. 1 and (B) in FIG. 1 are merely simplified diagrams for ease of understanding, and do not constitute a limitation on an application scenario of this application. For example, the system 101 and/or the system 102 may further include another FFD and/or another RFD.

For ease of understanding of the technical solutions in embodiments of this application, some terms or concepts that are used in embodiments of this application are first briefly described.

1. A UWB technology is a wireless carrier communication technology. In the UWB, a pulse whose pulse width is at a nanosecond level is used as a basic signal of the UWB. The UWB features a high transmission rate, a large system capacity, a large spectrum bandwidth, and low power spectrum density, and can coexist with an existing system of short-range communication and the like. Due to the features of the UWB, the UWB has high time resolution, a strong anti-multipath capability, and high ranging and positioning accuracy at a centimeter level. It has become a research hotspot to implement ranging and positioning in a complex multipath environment.

As the federal communications commission (federal communications commission, FCC) approved entry of the UWB technology into the civil field in 2002, ultra-wideband wireless communication has become one of the popular physical layer technologies for short-range and high-speed wireless networks. Many world-renowned companies, research institutes, and standardization organizations are actively engaged in the research, development, and standardization of ultra-wideband wireless communication technologies. The institute of electrical and electronics engineers (institute of electrical and electronic engineers, IEEE) has incorporated the UWB technology into its IEEE 802 series wireless standards, and has released a UWB technology-based WPAN standard IEEE 802.15.4a and an evolved version IEEE 802.15.4z thereof. Currently, a next-generation UWB technology-based WPAN standard 802.15.4ab has been put on the agenda.

2. Time division multiple access (time division multiple access, TDMA) is a communication technology used to share a transmission medium or a network. A plurality of users are allowed to use a same frequency in different time slices (for example, slots, symbols, and frames). The users perform transmission in rapid succession, one after the other, each using a time slice of the user. The TDMA technology allows a plurality of users to share a same transmission medium (for example, a radio frequency).

3. TDMA slot allocation: A condition for a network to access a channel in a TDMA manner is that all nodes in the network maintain slot synchronization. After slot synchronization is implemented in the entire network, how to effectively allocate slots so that the system can obtain better performance needs to be taken into consideration. Specifically, in a TDMA frame structure, one TDMA frame includes several subframes, and one subframe includes several slots. All or a part of slots in the TDMA frame structure may be allocated to a plurality of users based on data traffic that the users need, so that each user has a different slot. This ensures that signals of the users do not interfere with each other.

In addition, in the TDMA manner, uplink transmission and downlink transmission may be simultaneously performed in the slot of each user.

It should be understood that a TDMA slot allocation method is not limited in embodiments of this application. For details, refer to a current allocation algorithm or a TDMA slot allocation method proposed in a future communication technology.

4. WPAN is an emerging wireless communication network technology proposed to achieve a wireless seamless connection, with a small activity radius and rich service types, originated to a specific group. In terms of network composition, the WPAN is located at the end of an entire network chain, and is used to implement a connection between terminals at a same location, for example, a connection between a mobile phone and a Bluetooth headset. A coverage area of the WPAN is usually within a radius of 10 m and a WPAN device needs to run on a licensed wireless frequency band. The WPAN device has advantages of a low price, a small size, ease of operation, low power consumption, and the like.

The following briefly describes, with reference to FIG. 2, a ranging and positioning system to which the UWB ranging technology is applied. FIG. 2 is a diagram of an architecture of a ranging and positioning system according to an embodiment of this application. As shown in FIG. 2, the ranging and positioning system includes a plurality of devices (for example, a device 1 and a device 2 in FIG. 2), and each device includes at least a UWB module and a narrowband module. The device 1 and the device 2 may communicate with each other by using a UWB technology, or may communicate with each other by using a narrowband (narrow band, NB) technology. Specifically, positioning and/or ranging may be performed between the UWB modules of the device 1 and the device 2, and data transmission may be performed between the narrowband modules of the device 1 and the device 2 by using a radio link.

In this application, the UWB module may be understood as an apparatus, a chip, a system, or the like that implements a UWB wireless communication technology. Correspondingly, the narrowband module may be understood as an apparatus, a chip, a system, or the like that implements a narrowband communication technology (like Wi-Fi, Bluetooth, or ZigBee (ZigBee protocol)). In one device (device), a UWB module and a narrowband module may be different apparatuses or chips. Certainly, the UWB module and the narrowband module may alternatively be integrated into one apparatus or chip. Embodiments of this application do not limit implementations of the UWB module and the narrowband module in the device. The UWB technology can enable a communication apparatus to have a high data throughput and enable apparatus positioning to have high accuracy.

The device in this application may be a wireless communication chip, a wireless sensor, or a wireless communication terminal, for example, a user terminal, a user apparatus, an access apparatus, a subscriber station, a subscriber unit, a mobile station, a user agent, or user equipment that supports a Wi-Fi communication function. The user terminal may include various handheld devices, vehicle-mounted devices, wearable devices, internet of things (internet of things, IoT) devices, or computing devices that have a wireless communication function, or another processing device connected to a wireless modem, user equipment (user equipment, UE) of various forms, a mobile station (mobile station, MS), a terminal (terminal), a terminal device (terminal equipment), a portable communication device, a handheld device, a portable computing device, an entertainment device, a game device or system, a global positioning system device, or any other appropriate device configured to perform network communication via a wireless medium, or the like. In addition, the device may support the 802.15.4ab standard or a next-generation standard of 802.15.4ab. The device further supports a plurality of standards, such as 802.15.4a, 802.15.4-2011, 802.15.4-2015, and 802.15.4z. The device may further support a plurality of wireless local area network (wireless local area network, WLAN) standards of the 802.11 family, for example, the 802.11ax, 802.11ac, 802.11n, 802.11g, 802.11b, 802.11a, and a next generation of the 802.11be.

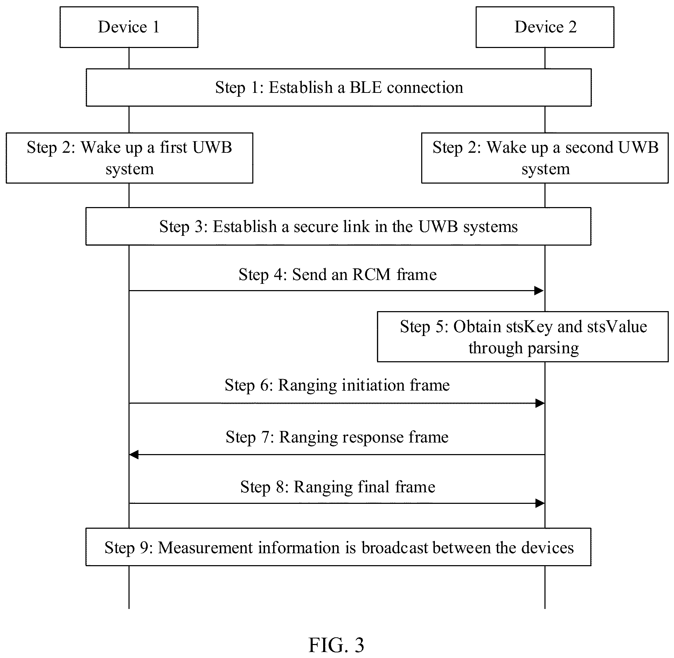

The following briefly describes a UWB ranging method with reference to FIG. 3. FIG. 3 is a diagram of a UWB ranging method according to an embodiment of this application. Usually, UWB needs to use a narrowband signal such as near field communication (near field communication, NFC), Bluetooth low energy (Bluetooth low energy, BLE), or wireless fidelity (wireless fidelity, Wi-Fi) as a driver. The UWB is woken up in a scenario required by a user. After being woken up, the UWB establishes a personal area network, performs time division multiple access (time division multiple access, TDMA) slot allocation, and completes required ranging and positioning functions. For example, a one-device-to-one-device ranging procedure is used as an example. The procedure includes the following steps.

Step 1: A BLE connection is established between the device 1 and the device 2, and a session key (sessionKey) is generated through negotiation through a BLE system.

It should be understood that the BLE connection established between the device 1 and the device 2 is used to wake up respective UWB systems of the device 1 and the device 2.

Step 2: A first UWB system is woken up, and a second UWB system is woken up.

The first UWB system of the device 1 is woken up due to the BLE connection between the device 1 and the device 2, and the second UWB system of the device 2 is also woken up due to the BLE connection between the device 2 and the device 1. After being woken up, the first UWB system and the second UWB system are initialized separately. For example, both the first UWB system and the second UWB system may apply a default parameter. For example, the default parameter may include a quantity of channels (channel number), a preamble code (preamble code), a rate, and the like that are defined during initialization. After the UWB systems of the device 1 and the device 2 are woken up, the first UWB system and the second UWB system may perform networking and ranging operations.

It should be understood that after the UWB systems are woken up, subsequent step 3 to step 9 are all completed in the UWB systems.

Step 3: After the UWB systems are woken up, the device 1 and the device 2 establish a secure link in the UWB systems based on sessionKey. Then, ranging starts to be performed in the UWB systems.

Generally, there are four roles in total in a ranging process: a ranging controller (controller), a ranging controlee (controlee), a ranging initiator (initiator), and a ranging responder (responder). The controller is responsible for sending a ranging control message (raging control message, RCM) frame. The RCM frame includes a security parameter, a role definition, and slot allocation control, that is, which device is used as the ranging initiator and which device is used as the ranging responder. In a ranging process, each time slice is allocated by using the RCM frame based on TDMA. For example, herein, an example in which the device 1 is used as both the ranging controller and the ranging initiator, and the device 2 is used as both the ranging controlee and the ranging responder is used for description. The device 1 implements ranging with the device 2.

Step 4: The device 1 sends the RCM frame to the device 2. Correspondingly, the device 2 receives the RCM frame sent by the device 1.

Specifically, the RCM frame may include the following information.
(1) Slot allocation information: The device 1 may allocate time based on TDMA, and define four roles in a ranging process. Specifically, a ranging process between the device 1 and the device 2 is performed by the device 1 and the device 2 based on a ranging phase allocated by the TDMA.
(2) Ranging information: The device 1 derives, based on sessionKey, a 128-bit STS value (stsValue) and a 128-bit STS key (stsKey) that are used to generate an STS, and assembles stsValue and stsKey into the ranging STS key data information element (ranging STS key data information element, RSKD IE). stsKey is carried in the STS key in the RSKD IE, and stsValue is carried in V3/V2/V1/Vcounter in the RSKD IE. The STS key occupies 128 bits, and the V1, V2, V3, and V counters each occupy 4 bytes, each of which occupies 32 bits.

Step 5: The device 2 obtains, through parsing, stsKey and stsValue from the RSKD IE of the RCM frame.

Step 6: The device 1 generates an STS ranging sequence based on stsKey and stsValue, and sends the STS ranging sequence to the device 2 as a ranging initiation frame. Correspondingly, the device 2 generates an STS based on stsKey and stsValue, receives the ranging initiation frame from the device 1 based on the STS, and measures the received ranging initiation frame.

Step 7: The device 2 generates an STS ranging sequence based on stsKey and stsValue, and sends the STS ranging sequence to the device 2 as a ranging response frame. Correspondingly, the device 1 generates an STS ranging sequence based on stsKey and stsValue, receives the ranging response frame from the device 2 based on the STS, and measures the received ranging response frame.

Step 8: The device 1 generates an STS ranging sequence based on stsKey and stsValue, and sends the STS ranging sequence to the device 2 as a ranging final frame. Correspondingly, the device 2 generates an STS ranging sequence based on stsKey and stsValue, receives the ranging final frame from the device 1 based on the STS, and measures the received ranging final frame.

It should be understood that step 6 to step 8 are described by using double-sided two-way ranging (double-sided two-way ranging, DS-TWR) as an example. If single-sided two-way ranging is used as an example, only step 6 and step 7 in step 6 to step 8 need to be performed.

Step 9: Measurement information is broadcast between the device 1 and the device 2, to calculate a time of flight of a ranging frame and complete ranging between the devices.

Specifically, the first UWB system may broadcast a ranging result determined by the first UWB system to the second UWB system. The second UWB system may also broadcast a ranging result determined by the second UWB system to the first UWB system.

Step 4 to step 8 may be considered as one ranging round. After the ranging round, a new ranging round may be repeated according to step 4 to step 8.

Currently, negotiation of stsKey and stsValue is not supported in one UWB ranging round. As a result, all ranging frames (namely, the ranging initiation frame, the ranging response frame, and the ranging final frame) in one ranging round are the same, and a security risk exists.

In view of this, this application provides a ranging method, to effectively resolve the foregoing technical problem.

A specific structure of an execution body of the method provided in embodiments of this application is not specially limited in the following embodiments, provided that a program that records code of the method provided in embodiments of this application can be run to perform communication according to the method provided in embodiments of this application. For example, the execution body of the method provided in embodiments of this application may be a transceiver device, or a functional module that is in the transceiver device and that can invoke and execute a program.

For ease of understanding of embodiments of this application, the following several points are described.

First, in this application, "indicate" may include "directly indicate" and "indirectly indicate". When a piece of indication information indicates A, the indication information may directly indicate A or indirectly indicate A, but it does not indicate that the indication information necessarily carries A.

Information indicated by indication information is referred to as to-be-indicated information. In a specific implementation process, there are a plurality of manners of indicating the to-be-indicated information, for example, but not limited to, the following manners: The to-be-indicated information may be directly indicated. For example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, a common part of all pieces of information may be identified and indicated together, to reduce indication overheads caused by separately indicating same information.

Second, "at least one" shown in this application means one or more, and "a plurality of" means two or more. In addition, in embodiments of this application, "first", "second", and various numeric numbers (for example, "#1" and "#2") are merely used for differentiation for ease of description, and are not used to limit the scope of embodiments of this application. The sequence numbers in the following processes do not mean execution sequences. The execution sequences of the processes should be determined based on functions and internal logic of the processes, and should not be construed as any limitation on implementation processes of embodiments of this application. It should be understood that, objects described in this way may be interchangeable in proper cases, so that solutions other than embodiments of this application can be described. In addition, in embodiments of this application, words such as "1010", "1020", and "1110" are merely identifiers for ease of description, and do not limit a sequence of performing steps.

Third, in embodiments of this application, words such as "example" or "for example" are used to give an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

Fourth, "being stored" in embodiments of this application may mean "being stored in one or more memories". The one or more memories may be separately disposed, or may be integrated into an encoder, a decoder, a processor, or a communication apparatus. Alternatively, some of the one or more memories may be separately disposed, and some may be integrated into a decoder, a processor, or a communication apparatus. A type of the memory may be a storage medium in any form. This is not limited in this application.

Fifth, a "protocol" in embodiments of this application may be a standard protocol in the communication field, for example, may include a Wi-Fi protocol, and a related protocol applied to a future communication system. This is not limited in this application.

Sixth, in embodiments of this application, "of (of)", "corresponding/relevant (corresponding/relevant)", "corresponding (corresponding)", and "associated (associated)" may sometimes be used interchangeably. It should be noted that expressed meanings are consistent when no difference between the terms is emphasized.

Seventh, the term "and/or" in this specification describes only an association relationship between associated objects and represents that three relationships may exist. For example, A and/or B may represent the following three cases: Only A exists, both A and B exist, and only B exists. In addition, the character "/" in this specification usually indicates an "or" relationship between associated objects.

Without loss of generality, the following describes in detail the ranging method provided in embodiments of this application by using interaction between a first device and a second device as an example.

By way of example, and not limitation, the first device may be a device having a communication capability in a WPAN, for example, an FFD or an RFD. Similarly, the second device may also be a device having a communication capability in the WPAN, for example, an FFD or an RFD. It should be understood that specific types of the first device and the second device are not limited in the following embodiments of this application, provided that steps performed by the first device and the second device in the following embodiments can be performed.

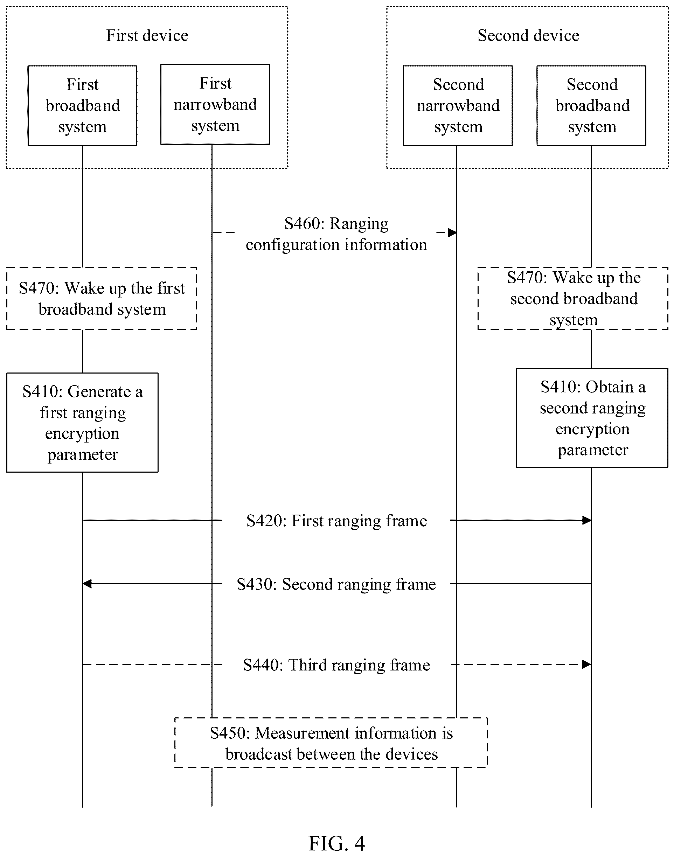

FIG. 4 is a schematic flowchart of a ranging method according to an embodiment of this application. The method may include the following steps.

S410: A first broadband system generates a first ranging encryption parameter, and a second broadband system obtains a second ranging encryption parameter. The first ranging encryption parameter includes a first ranging sequence value (value), the first ranging encryption parameter is the same as the second ranging encryption parameter, and the first ranging encryption parameter and the second ranging encryption parameter are respectively encryption parameters that need to be used for the first device and the second device to perform ranging.

Specifically, in this embodiment, a first device includes the first broadband system and a first narrowband system, and a second device includes the second broadband system and a second narrowband system. The first device and the second device may communicate with each other on a first channel by using the first broadband system and the second broadband system, or may communicate with each other on a second channel by using the first narrowband system and the second narrowband system. A bandwidth of the first channel is greater than a bandwidth of the second channel. For example, the first device may be the device 1 in FIG. 2, the first broadband system is the UWB module of the device 1, the first narrowband system is the narrowband module of the device 1, the second device may be the device 2 in FIG. 2, the second broadband system is the UWB module of the device 2, and the second narrowband system is the narrowband module of the device 2.

For example, the first ranging encryption parameter may further include a first ranging sequence key (key). For example, a bit length of a ranging sequence value may be 128 bits, and a bit length of a ranging sequence key may be 128 bits or 256 bits. This is not limited in this application.

For example, that the second broadband system obtains the second ranging encryption parameter includes: The first broadband system sends the first ranging encryption parameter to the second broadband system, or the second broadband system generates the second ranging encryption parameter. A specific process in which the second broadband system generates the second ranging encryption parameter is not described herein, and is specifically described in S470.

S420: The first broadband system sends a first ranging frame to the second broadband system, where the first ranging frame is generated based on the first ranging encryption parameter. Correspondingly, the second broadband system receives the first ranging frame from the first broadband system of the first device based on the second ranging encryption parameter.

Specifically, the first broadband system generates a first ranging sequence based on the first ranging encryption parameter, generates the first ranging frame based on the first ranging sequence, and then sends the first ranging frame to the second broadband system.

Specifically, the second broadband system generates the first ranging sequence based on the first ranging encryption parameter, receives the first ranging frame based on the first ranging sequence, and measures the first ranging frame.

For example, if the first ranging sequence is CTS, the first ranging sequence value in the first ranging encryption parameter is ctsValue, and the first ranging sequence key is ctsKey. Alternatively, the first ranging sequence may be another sequence applicable to the method. The first ranging sequence is not specifically limited in this application.

S430: The second broadband system sends a second ranging frame to the first broadband system, where the second ranging frame is generated based on a third ranging encryption parameter, and the third ranging encryption parameter is a corresponding parameter obtained by updating the first ranging sequence value in the first ranging encryption parameter to a second ranging sequence value. Correspondingly, the first broadband system receives the second ranging frame from the second broadband system based on the third ranging encryption parameter.

Specifically, the second broadband system updates the first ranging sequence value in the third ranging encryption parameter to the second ranging sequence value, to obtain the third ranging encryption parameter. The second broadband system generates a second ranging sequence based on the third ranging encryption parameter, generates the second ranging frame based on the second ranging sequence, and then sends the first ranging frame to the first broadband system.

Similarly, the first broadband system updates the first ranging sequence value in the third ranging encryption parameter to the second ranging sequence value, to obtain the third ranging encryption parameter. The first broadband system generates the second ranging sequence based on the third ranging encryption parameter, receives the second ranging frame based on the second ranging sequence, and measures the second ranging frame.

Optionally, the method further includes the following steps.

S440: The first broadband system sends a third ranging frame to the second broadband system, where the third ranging frame is generated based on a fourth ranging encryption parameter, and the fourth ranging encryption parameter is a corresponding parameter obtained by updating the second ranging sequence value in the third ranging encryption parameter to a third ranging sequence value. Correspondingly, the second broadband system receives the third ranging frame from the first broadband system based on the fourth ranging encryption parameter.

A specific implementation procedure of S440 is similar to that of S430, and details are not described herein again.

For example, when the ranging method is for double-sided two-way ranging, all steps corresponding to S420 to S440 may be performed. The first ranging frame is a ranging initiation frame, the second ranging frame is a ranging response frame, the third ranging frame is a ranging final frame, and the first ranging frame, the second ranging frame, and the third ranging frame are ranging frames that need to be sent in one ranging round.

For example, when the ranging method is for single-sided two-way ranging, only S420 and S430 in S420 to S440 may be performed. The first ranging frame is a ranging initiation frame, the second ranging frame is a ranging response frame, and the first ranging frame and the second ranging frame are ranging frames that need to be sent in one ranging round.

Based on the foregoing method, each ranging frame in one ranging round is determined based on different ranging encryption parameters, so that generated ranging frames are different from each other. This ensures that each ranging frame has a unique encryption parameter in a ranging process, to effectively improve security ranging performance.

It can be learned from the foregoing that, in S420, both the first broadband system and the second broadband system need to update the first ranging encryption parameter to the third ranging encryption parameter, and in S430, both the first broadband system and the second broadband system need to update the third ranging encryption parameter to the fourth ranging encryption parameter. Therefore, it may be considered that the first broadband system and the second broadband system need to update the current encryption parameter based on a same method.

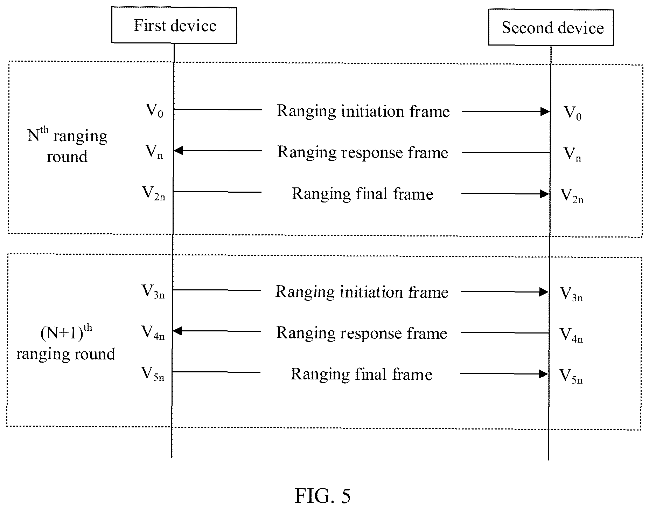

In an implementation, the second ranging sequence value is obtained by adding a first value and a value at a corresponding first position of the first ranging sequence value. For example, in an N^{th} ranging round, the first ranging encryption parameter includes ctsValue#1 (namely, an example of the first ranging sequence value) and ctsKey (namely, an example of the first ranging sequence key). For ease of description, an example in which a bit length of ctsValue and a bit length of ctsKey are 128 bits, the first value is n, and least significant 32 bits of ctsValue are the first position is used for description herein. As shown in FIG. 5, most significant 96 bits of ctsValue#1 are denoted as ctsVUpper, least significant 32 bits of ctsValue#1 are denoted as ctsVCounter, and an initial value of ctsVCounter is denoted as V₀. In this case, the third ranging encryption parameter in S420 includes ctsValue#2 and ctsKey, and the fourth ranging encryption parameter in S430 includes ctsValue#3 and ctsKey. Most significant 96 bits of ctsValue#2 and most significant 96 bits of ctsValue#3 are the same as those of ctsValue#1. Least significant 32 bits of ctsValue#2 are a value obtained by adding V₀ and n, which is denoted as Vₙ. Least significant 32 bits of ctsValue#3 are a value obtained by adding V₁ and n, which is denoted as V₂ₙ.

Alternatively, the first ranging sequence value may be continuously updated in another method, provided that an update method used by the first broadband system is consistent with an update method used by the second broadband system, that is, it is ensured that an updated ranging sequence value of the first broadband system is the same as an updated ranging sequence value of the second broadband system. A ranging sequence value update method is not specifically limited in this application.

Optionally, the method further includes the following steps.

S450: Measurement information is broadcast between the first narrowband system and the second narrowband system, to calculate a time of flight of a ranging frame and complete ranging between the first device and the second device.

It should be understood that when the first narrowband system sends measurement information to the second narrowband system, the first broadband system needs to first send a measurement to the first narrowband system. Similarly, when the second narrowband system sends measurement information to the first narrowband system, the second broadband system needs to first send a measurement to the second narrowband system. A procedure of information exchange between a narrowband system and a broadband system of a same device is not elaborated in the following.

After one round of ranging is completed, the foregoing method may be repeated in a new ranging round. For example, the ranging method is for double-sided two-way ranging, and there are a corresponding new ranging initiation frame, a corresponding new ranging response frame, and a corresponding new ranging final frame in an (N+1)^{th} ranging round. Based on the method shown in FIG. 5, the ranging initiation frame, the ranging response frame, and the ranging final frame in the (N+1)^{th} ranging round are respectively generated based on a ranging encryption parameter #1, a ranging encryption parameter #2, and a ranging encryption parameter #3. The ranging encryption parameter #1 includes ctsValue#4 and ctsKey, the ranging encryption parameter #2 includes ctsValue#5 and ctsKey, and the ranging encryption parameter #3 includes ctsValue#6 and ctsKey. Most significant 96 bits of ctsValue#4, most significant 96 bits of ctsValue#5, and most significant 96 bits of ctsValue#6 are the same as those of ctsValue#1. Least significant 32 bits of ctsValue#4 are a value obtained by adding V₂ and n, which is denoted as V₃ₙ. Least significant 32 bits of ctsValue#5 are a value obtained by adding V₃ and n, which is denoted as V₄ₙ. Least significant 32 bits of ctsValue#6 are a value obtained by adding V₄ and n, which is denoted as V₅ₙ.

It should be noted that, after a plurality of ranging rounds, as the first ranging sequence value is continuously updated, updated ranging sequence values may be repeated. Therefore, optionally, when a quantity of ranging rounds between the first device and the second device is equal to a first threshold (for example, the first threshold may be a preset value), the first broadband system regenerates a fifth ranging encryption parameter, and the second broadband system re-obtains a sixth ranging encryption parameter. The fifth ranging encryption parameter is the same as the sixth ranging encryption parameter, the fifth ranging encryption parameter is different from the first ranging encryption parameter, and the fifth ranging encryption parameter and the sixth ranging encryption parameter are respectively encryption parameters that need to be used for the first device and the second device to perform ranging after a quantity of ranging rounds corresponding to the first threshold. This further ensures that each ranging frame has a unique encryption parameter in ranging processes corresponding to a plurality of ranging rounds.

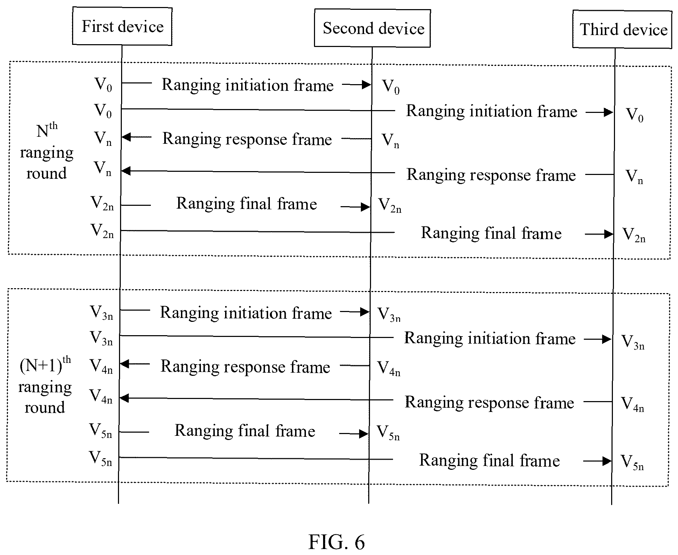

The foregoing describes in detail a ranging process based on the method, provided in this application, in which each ranging frame has a unique encryption parameter. The following describes, with reference to FIG. 6, steps that may need to be performed before S410.

S460: The first narrowband system sends ranging configuration information to the second narrowband system.

Optionally, the ranging configuration information includes a session key and a ranging parameter that are of the first device and the second device.

Optionally, the ranging parameter may include content such as a ranging method (rangingMethod), a ranging role, a frame parameter, a channel identifier (channelId), a preamble code length (preambleCodeLength), a preamble code index (preambleCodeIndex), and a session index (sessionId).

In a possible specific implementation, that the first narrowband system sends the ranging configuration information to the second narrowband system includes S4601 and S4602.

S4601: A communication link is established between the first narrowband system and the second narrowband system, and the session key is generated through negotiation through the communication link.

S4602: The first narrowband system sends an RCM frame to the second narrowband system, where the RCM frame includes the ranging parameter. Correspondingly, the second narrowband system receives the RCM frame sent by the first narrowband system.

In this step, the first device and the second device do not need to negotiate the ranging configuration information in the broadband systems, so that operating time of the broadband systems can be effectively reduced, and system power consumption can be reduced.

S470: The first broadband system is woken up, and the second broadband system is woken up.

The first broadband system of the first device is woken up due to a narrowband connection between the first device and the second device, and the second broadband system of the second device is also woken up due to the narrowband connection between the second device and the first device.

Based on S460 and S470, in a possible specific implementation, that the first broadband system generates the first ranging encryption parameter and the second broadband system obtains the second ranging encryption parameter in S410 may be implemented in the following manner: The first broadband system generates the first encryption parameter based on the ranging configuration information and a first key derivation algorithm, and the second broadband system generates the second encryption parameter based on the ranging configuration information and the first key derivation algorithm.

For example, the first key derivation algorithm may be agreed upon by the first broadband system and the second broadband system. Obtaining of the first key derivation algorithm is not specifically limited in this application.

For example, the first broadband system may use the ranging parameter to form a first input context (input context) with a bit length of 128 bits, and use the session key to form a second input context with a bit length of 128 bits or 256 bits. Then, the first broadband system generates, based on the first input context and the second input context, the first ranging sequence value and the first ranging sequence key (namely, the first ranging encryption parameter) by using the first key derivation algorithm. Similarly, the second broadband system generates, based on the first input context and the second input context, the same first ranging sequence value and the same first ranging sequence key (namely, the second ranging encryption parameter) by using the first key derivation algorithm.

It can be learned that, compared with the conventional technology, in this application, a communication link is established by using narrowband systems, and ranging configuration information is negotiated between the narrowband systems. In addition, the first device and the second device separately derive a same ranging encryption parameter based on a session key provided by the narrowband systems and a same key derivation algorithm without establishing a communication link between broadband systems to perform communication negotiation on a related parameter. This effectively reduces an operating time of the broadband systems and reduces system power consumption.

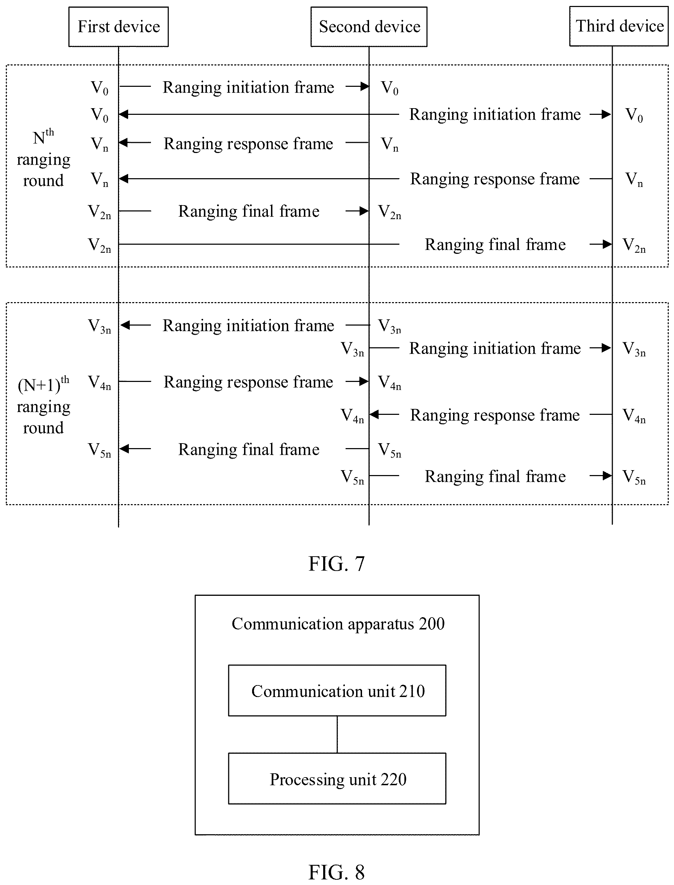

It may be understood that FIG. 5 may be considered as a diagram in which each ranging frame has a unique encryption parameter when one device performs ranging on another device. With reference to FIG. 6 and FIG. 7, the following provides a diagram in which each ranging frame has a unique encryption parameter when one device performs ranging on multiple devices, and when multiple devices perform ranging on multiple devices. For example, in FIG. 6 and FIG. 7, an example in which the ranging method is still for double-sided two-way ranging, the first ranging encryption parameter includes ctsValue#1 and ctsKey, least significant 32 bits of ctsValue#1 are the first position, and the first value is equal to n is still used for description.

FIG. 6 is a diagram in which each ranging frame has a unique encryption parameter when one device performs ranging on multiple devices according to this application. In the diagram, a first device may be considered as a ranging initiator, and a second device and a third device may be considered as ranging responders. Specifically, update of ctsVCounter in the one-to-multiple ranging procedure may be implemented through the following steps.

Step 1: In an N^{th} ranging round, the first device sends, to each of the second device and the third device, a ranging initiation frame determined based on ctsValue#1 and ctsKey, and the second device and the third device each receive the corresponding ranging initiation frame based on ctsValue#1 and ctsKey, where least significant 32 bits of ctsValue#1 are V₀.

It may also be understood that in a ranging initiation phase (ranging initiation phase, RIP) (for the ranging initiation frame), ctsVCounter used by the first device, ctsVCounter used by the second device, and ctsVCounter used by the third device are all V₀.

Step 2: The second device and the third device each send, to the first device, a ranging response frame determined based on ctsValue#2 and ctsKey, and the first device receives, based on ctsValue#2 and ctsKey, the corresponding ranging response frame from each of the second device and the third device, where least significant 32 bits of ctsValue#2 are a value obtained by adding V₀ and n, which is denoted as Vₙ.

It may also be understood that when a ranging phase changes from the RIP to a ranging response phase (ranging responder phase, RRP) (for the ranging response frame), or a task status is switched (for example, the first device switches from sending to receiving, and the second device and the third device switch from receiving to sending), ctsVCounter used by the first device, ctsVCounter used by the second device, and ctsVCounter used by the third device are all Vₙ.

Step 3: The first device sends, to each of the second device and the third device, a ranging final frame determined based on ctsValue#3 and ctsKey, and the second device and the third device each receive the corresponding ranging final frame based on ctsValue#3 and ctsKey, where least significant 32 bits of ctsValue#3 are a value obtained by adding Vₙ and n, which is denoted as V₂ₙ.

It may also be understood that when the ranging phase changes from the RRP to a ranging final phase (ranging final phase, RFP) (for the ranging final frame), or the task status is switched (for example, the first device switches from receiving to sending, and the second device and the third device switch from sending to receiving), ctsVCounter used by the first device, ctsVCounter used by the second device, and ctsVCounter used by the third device are all V₂ₙ.

It should be noted that when the ranging phase is a measurement report phase (measurement report phase, MRP), ctsVCounter used by the first device, ctsVCounter used by the second device, and ctsVCounter used by the third device remain unchanged.

Step 4: The ranging round is updated to an (N+1)^{th} ranging round, where similarly, in a RIP, ctsVCounter used by the first device, ctsVCounter used by the second device, and ctsVCounter used by the third device are all values obtained by adding V₂ₙ and n, which are denoted as V₃ₙ; in an RRP, ctsVCounter used by the first device, ctsVCounter used by the second device, and ctsVCounter used by the third device are all values obtained by adding V₃ₙ and n, which are denoted as V₄ₙ; and in an RFP, ctsVCounter used by the first device, ctsVCounter used by the second device, and ctsVCounter used by the third device are all values obtained by adding V₄ₙ and n, which are denoted as V₃ₙ.

Then, step 4 is repeated in an (N+2)^{th} ranging round. Details are not described herein again.

FIG. 7 is a diagram in which each ranging frame has a unique encryption parameter when multiple devices perform ranging on multiple devices according to this application. In the diagram, in an N^{th} ranging round, the first device may be considered as a ranging initiator, and the second device and the third device may be considered as ranging responders. In an (N+1)^{th} ranging round, the second device may be considered as a ranging initiator, and the first device and the third device may be considered as ranging responders. In the multiple-to-multiple ranging procedure, update of ctsVCounter may be implemented through the following steps.

For steps performed in the N^{th} ranging round, refer to descriptions in step 1 to step 3. Details are not described herein again.

Step 4: The ranging round is updated to the (N+1)^{th} ranging round, whose difference from the (N+1)^{th} ranging round in FIG. 6 lies in that in the method, in the (N+1)^{th} ranging round, the second device changes from a ranging responder to a ranging initiator, and the first device changes from a ranging initiator to a ranging responder. Similarly, in a RIP, ctsVCounter used by the first device, ctsVCounter used by the second device, and ctsVCounter used by the third device are all values obtained by adding V₂ₙ and n, which are denoted as V₃ₙ; in an RRP, ctsVCounter used by the first device, ctsVCounter used by the second device, and ctsVCounter used by the third device are all values obtained by adding V₃ₙ and n, which are denoted as V₄ₙ; and in an RFP, ctsVCounter used by the first device, ctsVCounter used by the second device, and ctsVCounter used by the third device are all values obtained by adding V₄ₙ and n, which are denoted as V₅ₙ.

Then, step 4 is repeated in a new ranging round. Details are not described herein again.

The foregoing describes the method embodiments in embodiments of this application, and the following describes corresponding apparatus embodiments.

It should be understood that sequence numbers of the foregoing processes do not mean execution sequences. The execution sequence of the processes should be determined based on functions and internal logic of the processes, and should not be construed as any limitation on implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further understood that, in some of the foregoing embodiments, a device in an existing network architecture is mainly used as an example for description. It should be understood that, a specific form of the device is not limited in embodiments of this application. For example, all devices that can implement a same function in the future are applicable to embodiments of this application.

It may be understood that, in the foregoing method embodiments, methods and operations implemented by a device (such as the terminal device or the network device) may also be implemented by a component (such as a chip or a circuit) of the device.

The foregoing describes in detail the method provided in embodiments of this application with reference to FIG. 1 and FIG. 7. The foregoing methods are mainly described from a perspective of interaction between the terminal device and the network device. It may be understood that, to implement the foregoing functions, the terminal device and the network device include corresponding hardware structures and/or software modules for performing the functions.

A person skilled in the art should be able to be aware that, in combination with the examples described in embodiments disclosed in this specification, units and algorithm steps can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

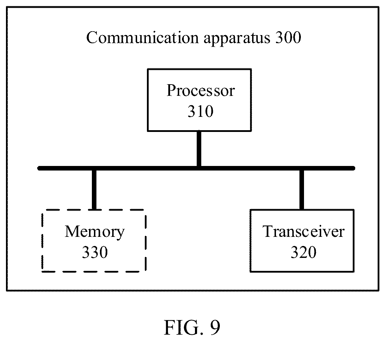

The communication apparatus provided in embodiments of this application is described below in detail with reference to FIG. 8 and FIG. 9. It should be understood that descriptions of apparatus embodiments correspond to the descriptions of the method embodiments. Therefore, for content that is not described in detail, refer to the foregoing method embodiments. For brevity, details of a part of content are not described herein again. In embodiments of this application, the first device or the second device may be divided into functional modules based on the foregoing method examples. For example, functional modules may be obtained through division based on corresponding functions, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. An example in which each functional module is obtained through division based on each corresponding function is used below for description.

The foregoing describes in detail the data transmission method provided in this application, and the following describes a communication apparatus provided in this application. In a possible implementation, the apparatus is configured to implement steps or procedures corresponding to the second device in the foregoing method embodiments. In another possible implementation, the apparatus is configured to implement steps or procedures corresponding to the first device in the foregoing method embodiments.

FIG. 8 is a block diagram of a communication apparatus 200 according to an embodiment of this application. As shown in FIG. 8, the apparatus 200 may include a communication unit 210 and a processing unit 220. The communication unit 210 may communicate with an external device, and the processing unit 220 is configured to process data. The communication unit 210 may also be referred to as a communication interface or a transceiver unit.

In a possible design, the apparatus 200 may implement steps or procedures performed by the first device in the foregoing method embodiments. The processing unit 220 is configured to perform processing-related operations of the first device in the foregoing method embodiments, and the communication unit 210 is configured to perform sending-related operations of the first device in the foregoing method embodiments.

In another possible design, the apparatus 200 may implement steps or procedures performed by the second device in the foregoing method embodiments. The communication unit 210 is configured to perform receiving-related operations of the second device in the foregoing method embodiments, and the processing unit 220 is configured to perform processing-related operations of the second device in the foregoing method embodiments.

It should be understood that the apparatus 200 herein is embodied in a form of functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 200 may be specifically the first device in the foregoing embodiments, and may be configured to perform the procedures and/or the steps corresponding to the first device in the foregoing method embodiments; or the apparatus 200 may be specifically the second device in the foregoing embodiments, and may be configured to perform the procedures and/or the steps corresponding to the second device in the foregoing method embodiments. To avoid repetition, details are not described herein again.

The apparatus 200 in the foregoing solutions has a function of implementing corresponding steps performed by the first device in the foregoing methods, or the apparatus 200 in the foregoing solutions has a function of implementing corresponding steps performed by the second device in the foregoing methods. The function may be implemented by hardware, or may be implemented by executing corresponding software by hardware. The hardware or software includes one or more modules corresponding to the foregoing function. For example, the communication unit may be replaced with a transceiver (for example, a sending unit of the communication unit may be replaced with a transmitter, and a receiving unit of the communication unit may be replaced with a receiver), and another unit such as the processing unit may be replaced with a processor, to separately perform the sending/receiving operations and the processing-related operations in the method embodiments.

In addition, alternatively, the communication unit may be a transceiver circuit (for example, may include a receiving circuit and a sending circuit), and the processing unit may be a processing circuit. In this embodiment of this application, the apparatus in FIG. 8 may be the AP or the STA in the foregoing embodiments, or may be a chip or a chip system, for example, a system-on-chip (system-on-chip, SoC). The communication unit may be an input/output circuit or a communication interface. The processing unit is a processor, a microprocessor, or an integrated circuit integrated on the chip. This is not limited herein.

FIG. 9 is a block diagram of a communication apparatus 300 according to an embodiment of this application. The apparatus 300 includes a processor 310 and a transceiver 320. The processor 310 and the transceiver 320 communicate with each other through an internal connection path, and the processor 310 is configured to execute instructions, to control the transceiver 320 to send a signal and/or receive a signal.

Optionally, the apparatus 300 may further include a memory 330. The memory 330 communicates with the processor 310 and the transceiver 320 through internal connection paths. The memory 330 is configured to store instructions, and the processor 310 may execute the instructions stored in the memory 330. In a possible implementation, the apparatus 300 is configured to implement procedures and steps corresponding to the first device in the foregoing method embodiments. In another possible implementation, the apparatus 300 is configured to implement procedures and steps corresponding to the second device in the foregoing method embodiments.

It should be understood that the apparatus 300 may be specifically the first device or the second device in the foregoing embodiments, or may be a chip or a chip system. Correspondingly, the transceiver 320 may be a transceiver circuit of the chip. This is not limited herein. Specifically, the apparatus 300 may be configured to perform steps and/or procedures corresponding to the first device or the second device in the foregoing method embodiments. Optionally, the memory 330 may include a read-only memory and a random access memory, and provide instructions and data for the processor. A part of the memory may further include a nonvolatile random access memory. For example, the memory may further store information of a device type. The processor 310 may be configured to execute the instructions stored in the memory, and when the processor 310 executes the instructions stored in the memory, the processor 310 is configured to perform the steps and/or procedures corresponding to the first device or the second device in the method embodiments.

In an implementation process, steps in the foregoing methods can be implemented by using a hardware integrated logic circuit in the processor, or by using instructions in a form of software. The steps of the method disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logic circuit in the processor, or by using instructions in a form of software. The processor may be a general purpose processor, a digital signal processor (DSP), an application specific integrated circuit (ASIC), a field programmable gate array (FPGA) or another programmable logic device, a discrete gate or a transistor logic device, or a discrete hardware component. The processor in embodiments of this application may implement or perform the methods, the steps, and the logical block diagrams that are disclosed in embodiments of this application. The general-purpose processor may be a microprocessor, or the processor may be any conventional processor or the like. The steps in the method disclosed with reference to embodiments of this application may be directly performed by a hardware decoding processor, or may be performed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these memories and any memory of another appropriate type.

It should be noted that, when the processor is a general-purpose processor, a DSP, an ASIC, an FPGA or another programmable logic device, a discrete gate or a transistor logic device, or a discrete hardware component, the memory (storage module) may be integrated into the processor.

In addition, this application further provides a computer-readable storage medium. The computer-readable storage medium stores computer instructions, and when the computer instructions are run on a computer, the operations and/or the procedures performed by the first device or the second device in the method embodiments of this application are performed.

This application further provides a computer program product. The computer program product includes computer program code or instructions, and when the computer program code or the instructions are run on a computer, the operations and/or the procedures performed by the first device or the second device in the method embodiments of this application are performed.

In addition, this application further provides a chip, and the chip includes a processor. A memory configured to store a computer program is disposed independent of the chip. The processor is configured to execute the computer program stored in the memory, to perform an operation and/or processing performed by the first device or the second device in any method embodiment.

Further, the chip may include a communication interface. The communication interface may be an input/output interface, an interface circuit, or the like. Further, the chip may include the memory.

In addition, this application further provides a communication system. The communication system includes the first device and the second device in embodiments of this application.

It should be further noted that the memory described in this specification is intended to include, but not limited to, these memories and any memory of another appropriate type.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application. It may be clearly understood by a person skilled in the art that, for the purpose of convenient and brief description, for a detailed working process of the foregoing system, apparatus, and unit, refer to a corresponding process in the foregoing method embodiments. Details are not described herein again. In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms. The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments. In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a second device, or the like) to perform all or some of the steps of the method described in embodiments of this application. The foregoing storage medium includes any medium that can store program code, such as a USB flash drive, a removable hard disk, a ROM, a RAM, a magnetic disk, or an optical disc.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments in any appropriate manner.

It should be further understood that ordinal numerals such as "first" and "second" in embodiments of this application are used to distinguish between a plurality of objects, and are not intended to limit sizes, content, an order, a time sequence, priorities, or importance degrees of the plurality of objects. For example, first information and second information do not indicate a difference in an information amount, content, a priority, importance, or the like.

It should be further understood that, in this application, both "when" and "if" mean that a network element performs corresponding processing in an objective situation, but do not constitute a limitation on time, do not require that the network element has a determining action during implementation, and do not mean other limitations either.

It should be further understood that in this application, "at least one" means one or more, and "a plurality of" means two or more. "At least one of items (pieces)" or a similar expression thereof means one item (piece) or a plurality of items (pieces), that is, any combination of these items, including any combination of singular items (pieces) or plural items (pieces). For example, at least one of a, b, or c may represent a, b, c, a and b, a and c, b and c, or a, b, and c.

It should be further understood that, unless otherwise specified, a meaning similar to "an item includes one or more of the following: A, B, and C" in this application usually means that the item may be any one of the following: A; B; C; A and B; A and C; B and C; A, B and C; A and A; A, A and A; A, A and B;A,A and C; A, B and B; A, C and C; B and B, B, B and B, B, B and C, C and C; C, C and C, and other combinations of A, B, and C. The foregoing uses three elements A, B, and C as an example to describe an optional case of the item. When an expression is "an item includes at least one of the following: A, B, ..., and X", that is, when more elements are included in the expression, a case to which the item is applicable may also be obtained according to the foregoing rule.

It should be further understood that the term "and/or" in this specification describes only an association relationship between associated objects, and represents that three relationships may exist. For example, A and/or B may represent the following cases: Only A exists, both A and B exist, and only B exists, where A and B may be singular or plural. The character "/" usually indicates an "or" relationship between the associated objects. For example, A/B indicates A or B.

It should be further understood that in embodiments of this application, "B corresponding to A" indicates that B is associated with A, and B may be determined based on A. However, it should be further understood that determining B based on A does not mean that B is determined based only on A. B may alternatively be determined based on A and/or other information.

## Claims

1. A ranging method, applied to a first device, wherein the first device comprises a first broadband system and a first narrowband system, a channel bandwidth corresponding to the first broadband system is greater than a channel bandwidth corresponding to the first narrowband system, and the method comprises:
generating, by the first broadband system, a first ranging encryption parameter, wherein the first ranging encryption parameter comprises a first ranging sequence value, the first ranging encryption parameter is the same as a second ranging encryption parameter, and the first ranging encryption parameter and the second ranging encryption parameter are respectively encryption parameters that need to be used for the first device and a second device to perform ranging;
sending, by the first broadband system, a first ranging frame to a second broadband system of the second device, wherein the first ranging frame is generated based on the first ranging encryption parameter; and
receiving, by the first broadband system, a second ranging frame from the second broadband system based on a third ranging encryption parameter, wherein the third ranging encryption parameter is a corresponding parameter obtained by updating the first ranging sequence value in the first ranging encryption parameter to a second ranging sequence value, and the second ranging frame is generated based on the third ranging encryption parameter.

2. The method according to claim 1, wherein the first ranging encryption parameter further comprises a first ranging sequence key.

3. The method according to claim 1 or 2, wherein the method further comprises:
generating, by the first broadband system, a first ranging sequence based on the first ranging encryption parameter; and
generating, by the first broadband system, the first ranging frame based on the first ranging sequence.

4. The method according to claim 3, wherein the first ranging sequence is a channel impulse response training sequence.

5. The method according to any one of claims 1 to 4, wherein the second ranging sequence value is obtained by adding a first value and a value at a corresponding first position of the first ranging sequence value.

6. The method according to any one of claims 1 to 5, wherein
the first ranging encryption parameter is generated by the first broadband system based on ranging configuration information and the first key derivation algorithm; and
the second ranging encryption parameter is generated by the second broadband system based on the ranging configuration information and the first key derivation algorithm.

7. The method according to claim 6, wherein the method further comprises:
sending, by the first narrowband system, the ranging configuration information to a second narrowband system of the second device.

8. The method according to claim 6 or 7, wherein the ranging configuration information comprises a session key and a ranging parameter that are of the first device and the second device.

9. The method according to any one of claims 1 to 8, wherein the method further comprises:
sending, by the first broadband system, a third ranging frame to the second broadband system, wherein the third ranging frame is generated based on a fourth ranging encryption parameter, and the fourth ranging encryption parameter is a corresponding parameter obtained by updating the second ranging sequence value in the third ranging encryption parameter to a third ranging sequence value.

10. The method according to any one of claims 1 to 9, wherein the method further comprises:
sending, by the first broadband system, the first ranging frame to a third broadband system of a third device; and
receiving, by the first broadband system, a fourth ranging frame from the third broadband system based on the third ranging encryption parameter, wherein the fourth ranging frame is generated based on the third ranging encryption parameter.

11. The method according to any one of claims 1 to 10, wherein the method further comprises:
when a quantity of ranging rounds between the first device and the second device is equal to a first threshold, generating, by the first broadband system, a fifth ranging encryption parameter, wherein
the fifth ranging encryption parameter is the same as a sixth ranging encryption parameter, the fifth ranging encryption parameter is different from the first ranging encryption parameter, the sixth ranging encryption parameter is a ranging encryption parameter generated by the second broadband system when the quantity of ranging rounds is equal to the first threshold, and the fifth ranging encryption parameter and the sixth ranging encryption parameter are respectively encryption parameters that need to be used for the first device and the second device to perform ranging after a quantity of ranging rounds corresponding to the first threshold.

12. A ranging method, applied to a second device, wherein the second device comprises a second broadband system and a second narrowband system, a channel bandwidth corresponding to the second broadband system is greater than a channel bandwidth corresponding to the second narrowband system, and the method comprises:
obtaining, by the second broadband system, a second ranging encryption parameter, wherein the second ranging encryption parameter comprises a first ranging sequence value, the second ranging encryption parameter is the same as a first ranging encryption parameter, and the first ranging encryption parameter and the second ranging encryption parameter are respectively encryption parameters that need to be used for a first device and the second device to perform ranging;
receiving, by the second broadband system, a first ranging frame from a first broadband system of the first device based on the second ranging encryption parameter, wherein the first ranging frame is generated based on the first ranging encryption parameter; and
sending, by the second broadband system, a second ranging frame to the first broadband system, wherein the second ranging frame is generated based on a third ranging encryption parameter, and the third ranging encryption parameter is a corresponding parameter obtained by updating the first ranging sequence value in the first ranging encryption parameter to a second ranging sequence value.

13. The method according to claim 12, wherein the first ranging encryption parameter further comprises a first ranging sequence key.

14. The method according to claim 12 or 13, wherein the method further comprises:
generating, by the second broadband system, a second ranging sequence based on the third ranging encryption parameter; and
generating, by the second broadband system, the second ranging frame based on the second ranging sequence.

15. The method according to claim 14, wherein the second ranging sequence is a channel impulse response training sequence.

16. The method according to any one of claims 12 to 15, wherein the second ranging sequence value is obtained by adding a first value and a value at a corresponding first position of the first ranging sequence value.

17. The method according to any one of claims 12 to 16, wherein
the first ranging encryption parameter is generated by the first broadband system based on ranging configuration information and the first key derivation algorithm; and
the second ranging encryption parameter is generated by the second broadband system based on the ranging configuration information and the first key derivation algorithm.

18. The method according to claim 17, wherein the method further comprises:
receiving, by the second narrowband system, the ranging configuration information from a first narrowband system of the first device.

19. The method according to claim 17 or 18, wherein the ranging configuration information comprises a session key and a ranging parameter that are of the first device and the second device.

20. The method according to any one of claims 12 to 19, wherein the method further comprises:
receiving, by the second broadband system, a third ranging frame from the first broadband system based on a fourth ranging encryption parameter, wherein the fourth ranging encryption parameter is a corresponding parameter obtained by updating the second ranging sequence value in the third ranging encryption parameter to a third ranging sequence value, and the third ranging frame is generated based on the fourth ranging encryption parameter.

21. The method according to any one of claims 12 to 20, wherein the method further comprises:
when a quantity of ranging rounds between the first device and the second device is equal to a first threshold, generating, by the second broadband system, a sixth ranging encryption parameter, wherein
the sixth ranging encryption parameter is the same as a fifth ranging encryption parameter, the sixth ranging encryption parameter is different from the second ranging encryption parameter, the fifth ranging encryption parameter is a ranging encryption parameter generated by the first broadband system when the quantity of ranging rounds is equal to the first threshold, and the fifth ranging encryption parameter and the sixth ranging encryption parameter are respectively encryption parameters that need to be used for the first device and the second device to perform ranging after a quantity of ranging rounds corresponding to the first threshold.

22. A communication apparatus, comprising a module or a unit configured to perform the method according to any one of claims 1 to 21.

23. A communication apparatus, comprising a processor, wherein the processor is configured to execute computer instructions stored in a memory, to enable the apparatus to perform the method according to any one of claims 1 to 11 or the method according to any one of claims 12 to 21.

24. A communication apparatus, comprising a logic circuit and an input/output interface, wherein the logic circuit is configured to: be coupled to the input/output interface, and communicate data through the input/output interface, to perform the method according to any one of claims 1 to 11 or the method according to any one of claims 12 to 21.

25. A computer-readable storage medium, wherein the computer-readable storage medium stores computer instructions, and when the computer instructions are run on a computer, the method according to any one of claims 1 to 11 is performed, or the method according to any one of claims 12 to 21 is performed.

26. A computer program product, comprising instructions, wherein when the instructions are run on a computer, the computer is enabled to perform the method according to any one of claims 1 to 11 or the method according to any one of claims 12 to 21.
